(19) Europäisches Patentamt
European Patent Office
Office européen des brevets

(11) EP 2 687 558 A1

(12) EUROPEAN PATENT APPLICATION
published in accordance with Art. 153(4) EPC

(43) Date of publication:
22.01.2014 Bulletin 2014/04

(51) Int Cl.:
C08J 7/04 (2006.01)       B29C 55/14 (2006.01)
B32B 27/14 (2006.01)      B32B 27/20 (2006.01)
G02B 5/02 (2006.01)       B29L 9/00 (2006.01)

(21) Application number: 12761406.3

(22) Date of filing: 14.03.2012

(86) International application number:
PCT/JP2012/056501

(87) International publication number:
WO 2012/128136 (27.09.2012 Gazette 2012/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 18.03.2011  JP 2011060298
27.09.2011  JP 2011210279

(71) Applicant: Toray Industries, Inc.
Tokyo, 103-8666 (JP)

(72) Inventors:
• MAEKAWA Shigetoshi
Otsu-shi
Shiga 520-8558 (JP)
• OHIRA Takayuki
Otsu-shi
Shiga 520-8558 (JP)
• OGATA Kazumasa
Otsu-shi
Shiga 520-8558 (JP)
• TAKAHASHI Kozo
Otsu-shi
Shiga 520-8558 (JP)

(74) Representative: Webster, Jeremy Mark et al
Mewburn Ellis LLP
33 Gutter Lane
London
EC2V 8AS (GB)

(54) LAMINATE FILM AND METHOD FOR MANUFACTURING SAME

(57) The present invention provides a laminated film where a coating layer containing organic particles is provided on the surface of a base film and the ratio (SRz/d) of the surface roughness (SRz) of the coating layer surface and the coating thickness (d) is 12.5 or higher, wherein the organic particles are made from a thermoplastic resin containing ether bonds, and the coating layer is made from a binder resin containing at least one type of a sulfonic acid group, carboxylic acid group, or hydroxyl group, or a salt thereof, and also provides a method for manufacturing the same. The present invention can provide at low cost a laminated film that does not shed organic particles and that has a coating layer containing beads or particles having a large uneven surface.

FIG. 1

## Description

Technical Field of the Invention

The present invention relates to a laminated film provided with a coating layer on the surface, and a method for manufacturing the same. Specifically, it relates to a laminated film provided with the coating layer containing organic particles on the surface, and the method for manufacturing the same.

Background Art of the Invention

In late years, various liquid crystal displays are used for PC, TV, cell-phone or the like. Because these liquid crystal displays are not luminescent in themselves, they are irradiated with surface illuminants called "backlight" from the back side so that they can function as display units. The backlight has a structure of so called "sidelight-type" or "direct-type" surface illuminator, not only to merely irradiate a light but also to irradiate a whole screen uniformly. Above all, a sidelight-type backlight having a light source of CCFL or LED is applied to a use, such as TV, monitor, thin liquid crystal display installed in notebook PC, which is required to make thinner as well as to save energy.

Generally, such a sidelight-type backlight having the light source of CCFL or LED is provided with a light guide plate which propagates and diffuses the light from the light source of CCFL or LED so that a whole liquid crystal display is irradiated from the edge of the light guide plate. In such an irradiation method, the back side of the light guide plate is provided with a light reflector to efficiently reflect the light diffused through the light guide plate to the liquid crystal screen side from a viewpoint of efficient use of the light.

However, if unevenness of the housing applies a pressing force between the light guide plate and the light reflector or if static electricity is generated therebetween, the light guide plate might adhere to the light reflector. If such an adherence occurs, the unevenness printed on the light guide plate might be scraped off or defects such as white points might appear partially on the lighted liquid crystal display. To prevent such a problem, Patent documents 1 to 4 disclose technologies in which the light reflector is coated on the surface with coating liquid containing organic particles (such as plastic beads) or inorganic particles to make unevenness of which surface roughness is several micron or more.

On the other hand, Patent documents 5 to 7 disclose methods (called "in-line coating methods") for coating a film with particles during forming the film, from a viewpoint of cost saving.

**Prior art documents**

**Patent documents**

Patent document 1: JP2002-162511-A
Patent document 2: JP2003-92018-A
Patent document 3: JP2003-107216-A
Patent document 4: JP2004-85633-A
Patent document 5: JP2011-13402-A
Patent document 6: JP2004-195673-A
Patent document 7: JP4-288217-A

Summary of the Invention

Problems to be solved by the Invention

To obtain the laminated films disclosed in Patent documents 1 to 4, a sufficient coating thickness is necessary so that particles are retained to prevent particles of greater diameter from dropping off. Thus the greater amount of coating  liquid is required and therefore the cost tends to get higher.

If a volatile organic solvent is employed to form a sufficient coating thickness, an explosion-proof oven may be required in order to dry it up for a long time. Then the cost might get higher if a method (offline coating method) to coat an already-formed film with coating liquid and then dry it up with such an oven would be employed.

To reduce the cost, the in-line coating method disclosed in Patent documents 5 to 7 where the unstretched or uniaxially-stretched films is coated with the coating agent and then stretched and heat treated can be employed. However, such a method cannot be employed to thicken the coating film sufficiently because of a short drying time. Therefore if large particles are contained inside, the particles might drop off because of weak adherence to the coating film.

Means for solving the Problems

To solve the above-described problem, a laminated film and a method for manufacturing it according to the present invention are configured as follows.

(1) A laminated film comprising a base film and a coating layer, which contains organic particles and is provided on a surface of the base film, wherein a ratio (SRz/d) of a surface roughness (SRz) and a coating thickness (d) on a surface of the coating layer is 12.5 or more, characterized in that the organic particle is made of a thermoplastic resin including an ether bond while the coating layer is made of a binder resin including at least one selected from a sulfonic acid group, a carboxylic acid group, a hydroxyl group and a salt of them.

(2) A laminated film comprising a base film and a coating layer, which contains organic particles and is provided on a surface of the base film, wherein a ratio (R/d) of a number average particle diameter (R) and a coating thickness (d) on a surface of the coating layer is 10.5 or more, characterized in that the organic particle is made of a thermoplastic resin including an ether bond while the coating layer is made of a binder resin including at least one selected from a sulfonic acid group, a carboxylic acid group, a hydroxyl group and a salt of them.

(3) The laminated film according to item (1) or (2), wherein the organic particle is coated with the binder resin.

(4) The laminated film according to any of items (1) to (3), wherein the surface roughness (SRz) is 5 $\mu$m or more.

(5) The laminated film according to any of items (1) to (4), wherein the coating thickness (d) is 1,100nm or less.

(6) The laminated film according to any of items (1) to (5), wherein a flexural modulus of the organic particles is between 500MPa and 3,000MPa.

(7) The laminated film according to any of items (1) to (6), wherein a particle diameter distribution index of the organic particles is between 1 and 3.

(8) The laminated film according to any of items (1) to (7), wherein a particle density of the organic particles is between 5 units/mm$^2$ and 100,000 units/mm$^2$.

(9) The laminated film according to any of items (1) to (8), wherein the base film comprises a white film.

(10) A method for manufacturing the laminated film according to any of items (1) to (9), characterized in that after coating a uniaxially-stretched base film with a coating liquid containing the organic particles and the binder resin including at least one selected from a sulfonic acid group, a carboxylic acid group, a hydroxyl group and a salt of them, the base film coated with the coating liquid is further stretched in a direction crossing a uniaxially-stretching direction of the base film and then is heat treated.

(11) The method for manufacturing the laminated film according to item (10), wherein a number average particle diameter R' of the organic particles contained in the coating liquid is 5$\mu$m or more.

(12) The method for manufacturing the laminated film according to item (10) or (11), wherein a particle diameter distribution index of the organic particles included in the coating liquid is between 1 and 3.

(13) The method for manufacturing the laminated film according to any of items (10) to (12), wherein a flexure modulus of the organic particles contained in the coating liquid is between 500MPa and 3,000MPa.

Effect according to the Invention

The laminated film and the method for manufacturing it according to the present invention could provide a laminated film provided with a coating layer containing organic particles prevented from dropping off on the base film surface for a low cost.

Brief explanation of the drawings

[Fig. 1] Fig. 1 is a schematic section view of a laminated film according to an embodiment of the present invention.

[Fig. 2] Fig. 2 is SEM-observation of a cross section of a laminated film according to an embodiment of the present invention around organic particles contained in a coating layer.

[Fig. 3] Fig. 3 is an observation of white points appeared on a backlight unit, where (A) shows on state without white points and (B) shows another state with white points.

Embodiments for currying out the Invention

(1) Constitution of laminated film

The laminated film comprises a base film and a coating layer which contains binder resin and organic particles and is provided on at least one of surfaces of the base film.

It is preferable that a coating thickness (d; distance between the base film surface in a part containing no organic particles and the coating layer surface) is 1,100nm or thinner. It is more preferably 800nm or thinner, and further preferably 400nm or thinner. If the coating thickness is set in the above-described range, the consumption of the binder resin can be reduced, and the in-line coating method can be applied to reduce the cost greatly. If the coating thickness is thicker than 1,100nm, the coating appearance might be greatly deteriorated because of uneven coating or the like. It is preferable that the lower limit of the coating thickness is 50nm. If the coating thickness is thinner than 50nm, the organic particles might drop off. To measure the coating thickness of the coating layer, it is possible that the cross section containing particles is cut to be observed with the scanning electronic microscope (SEM) or transmission electronic microscope (TEM). To achieve setting the coating thickness of the coating layer in the above-described range, it is possible that a binder resin concentration in a coating liquid and the coating thickness of the coating liquid are adjusted.

It is preferable that surface roughness (SRz; three-dimensional ten-point average roughness) on the coating layer surface is $5\mu$m or more and $60\mu$m or less. It is more preferably $10\mu$m or more and $30\mu$m or less. If it is less than $5\mu$m, white points might appear when the laminated film made by coating a white film is installed as a light reflector in a liquid crystal display. If it is more than $60\mu$m, particles might drop off. To set the surface roughness in the above-described range, it is possible that the diameter of the organic particle, the binder resin concentration of the coating liquid and the coating thickness of the coating liquid are adjusted.

Ratio (SRz/d) of surface roughness (SRz) and coating thickness (d) on the coating layer surface is 12.5 or more. It is preferably 25 or more, and more preferably 50 or more. The consumption of the binder resin in the coating liquid can be reduced by setting ratio (SRz/d) in the above-described range. It is preferable that ratio (SRz/d) is 300 or less, and more preferably less than 300. It is further preferably 250 or less, and particularly preferably less than 250. If ratio (SRz/d) is beyond the above-described range, the organic particles might not be sufficiently coated with the binder resin and the particles might drop off. Further, the parts from which the particles have dropped off might cause coating defects to deteriorate the coating appearance. If ratio (SRz/d) is less than 12.5, the coating thickness tends to thicken and the coating appearance might deteriorate because of uneven coating or the like. To set ratio (SRz/d) in the above-described range, it is possible that the diameter of the organic particle, the binder resin concentration of the coating liquid and the coating thickness of the coating liquid are adjusted. Ratio (SRz/d) of surface roughness (SRz) and coating thickness (d) on the coating layer surface is determined by the method to be described.

It is preferable that ratio (R/D) of number average particle diameter (R) and coating layer thickness (d) on the coating layer surface is 10.5 or more. It is more preferably 20 or more, and more preferably 45 or more. If ratio (R/d) is set in the above-described range, the consumption of the binder resin in the coating liquid can be reduced. It is preferable that ratio (R/d) is 250 or less, and more preferably 200 or less. If ratio (R/d) is beyond the above-described range, the organic particles might not be sufficiently coated with the binder resin and might drop off. Further, the parts from which the particles have dropped off might cause coating defects to deteriorate the coating appearance. If ratio (R/d) is less than 10.5, the coating thickness tends to thicken and the coating appearance might deteriorate because of uneven coating or the like. To set ratio (R/d) in the above-described range, it is possible that the diameter of the organic particle, the binder resin concentration of the coating liquid and the coating thickness of the coating liquid are adjusted. Ratio (R/d) of number average particle diameter (R) and coating thickness (d) is determined by the method to be described.

(2) Constitution of coating layer

(2. 1) Binder resin

The binder resin is made of a water-soluble resin. The "water-soluble resin" means a resin including at least one functional group selected from sulfonic acid group, carboxylic acid group, hydroxyl group and the salt thereof. It is preferable that the water-soluble resin is a resin made by copolymerizing monomers having a functional group such as sulfonic acid group, sulfonic acid salt group, carboxylic acid group and carboxylic acid salt group. It is more preferably a resin made by copolymerizing monomers having carboxylic acid group and/or carboxylic acid salt group. If the resin is water-soluble, the coating layer can be formed such that affinities with the base film and the organic particles are excellent while the organic particles hardly drop off even if ratio (SRz/d) of surface roughness (SRz) and coating thickness (d) is 12.5 or more. Further, if the binder resin is water-soluble, a coating liquid can be prepared by dissolving and dispersing the binder resin and the organic particles in water. Of course, the binder resin and organic particles may be separately dissolved and dispersed in water in advance, and then they may be mixed arbitrarily. From a viewpoint of cost saving, it is preferable to prepare a coating liquid with water so that the in-line coating method can be applied to the coating. To copolymerize a monomer having the above-described functional group with the binder resin, a conventional method can be applied. It is preferable that the water-soluble resin comprises at least one selected from polyester resin, acrylic resin and polyurethane resin. It more preferably comprises polyester resin or acrylic resin. The above-described resins can exhibit characteristics desirable for the binder resin, such as transparency and good coherency to the base film. The water-soluble resin may be "WATERSOL (registered trademark)" made by DIC Corporation or "PESRESIN" made by Takamatsu Oil and Fat Co., Ltd.

As far as inventive effects are not inhibited, it is possible that various additives are added to the binder resin constituting the coating layer. The additive may be antioxidant, cross-linker, fluorescent brightener, antistatic agent, coupling agent or the like.

For example, if the cross-linker is added in the coating layer, the coherence to the base film can be improved and the number of organic particles to drop off can be reduced. The cross-linker may be isocyanate cross-linker, silicone cross-linker, polyolefin cross-linker or the like. Above all, isocyanate cross-linker which can form urethane bond by addition polymerization with a compound having hydroxyl group is suitably employed. Isocyanate cross-linker may be 2,4-tolylene diisocyanate, 2,6-tolyelene diisocyanate, hexamethylene diisocyanate, diphenyl methane diisocyanate or the like. It is preferable that the content of the cross-linker in the coating layer is 5% by weight or less. It is more preferably 0.1 - 4% by weight, and most preferably 0.5 - 3% by weight. If the content of the cross-linker is set in the desirable range, its advantage can be obtained and the film is prevented from curling after the coating layer is formed.

If the antistatic agent is added thereto, the film is prevented from catching foreign substances such as dusts. The antistatic agent may be surfactant, ion-based conductive polymer, electron-conductive polymer, conductive metal oxide, metal or the like. Examples of the surfactant and ion-based conductive polymer are as follows.

The surfactant may be an anion surfactant such as sulfonate compound, N-acyl amino acid or salt thereof and alkyl ether carboxylate, a cation surfactant such as aliphatic amine salt and aliphatic quaternary ammonium salt, or an amphoteric surfactant such as carboxy betaine, imidazolinium betaine and amino carboxylate. Above all, sulfonate compound is suitably employed and may be dodecyl benzene sulphonic acid sodium, stearyl benzene sulphonic acid sodium, octyl benzene sulphonic acid sodium, dodecyl benzene sulphonic acid potassium, dodecyl benzene sulphonic acid lithium, octyl naphthalene sulfonic acid lithium, oxyl naphthalene sulfonic acid sodium, dodecyl naphthalene sulfonic acid sodium, dodecyl naphthalene sulfonic acid potassium, butyl sulfonic acid sodium, pentyl sulfonic acid sodium, hexyl sulfonic acid sodium, heptyl sulfonic acid sodium, octyl sulfonic acid sodium, nonyl sulfonic acid sodium, decyl sulfonic acid sodium, undecyl sulfonic acid sodium, dodecyl sulfonic acid sodium, tridecyl sulfonic acid sodium, tetradecyl sulfonic acid sodium, tetradecyl sulfonic acid sodium, pentadecyl sulfonic acid sodium, hexadecyl sulfonic acid sodium, heptadecyl sulfonic acid sodium, octadecyl sulfonic acid sodium, decyl sulfonic acid potassium, dodecyl sulfonic acid potassium, octadecyl sulfonic acid potassium.

The ion-based conductive polymer may be polystyrene sulfonate salt such as polystyrene sulfonate and alkali metal or ammonium salt thereof, phosphate-based high-molecule compound made by copolymerizing monomers of a phosphate-based low-molecule compound such as alkylphosphonate ester salt and alkyl ether phosphate salt, and polyacrylate having ionic functional group.

(2. 2) Organic particle

The organic particle is made of thermoplastic resin including ether bond. Because the thermoplastic resin includes ether bond, the affinity between the organic particle and binder resin can be enhanced so as not to drop the particle off. If the organic particle were made of thermosetting resin, particles might drop off. Though details of the anti-drop mechanism are not clear, it is thought that the chemical affinity between ether bond and the hydrophilic substituent such as sulfonic acid group, carboxylic acid group and hydroxyl group included in the binder resin is strong enough to form a strong bond. It is also thought that the organic particles made of thermoplastic resin form an intermediate layer at the interface to the binder resin to form a further strong bond.

The thermoplastic resin including ether bond may be polyether resin or a resin made by copolymerizing polyether with another resin. Specifically, it may be polyoxymethylene, formal resin, polyphenylene oxide, polyether ketone, polyetheretherketone, polyether ketone ketone, polyethersulfone, polyphenylsulfone, polyetherimide, polyether-ester, polyether-ester amide, polyether amide, polyester containing spiroglycol or the like. From viewpoints of transparency and reproducibility, it is preferable to employ polyether-ester or polyester containing spiroglycol. Specifically, it is preferable to employ polyether-ester which can adjust a coefficient of elasticity by setting a copolymerization ratio. The polyether-ester may be "HYTREL (registered trademark)" made by Du Pont company, "RITEFLEX (registered trademark)" made by Ticona company, "ARNITEL (registered trademark)" made by DSM N. V., or the like available from many companies.

It is preferable that the thermoplastic resin constituting the organic particle has a flexural modulus of 500MPa or more and 3,000MPa or less. It is more preferably 1,000MPa or more and 2,000MPa or less. The "flexural modulus" means a measured value according to ASTM-D790-98. To prepare a measurement sample, thermoplastic resin (pellet) constituting the organic particle is dried up with hot wind at 90°C for 3 hours or more, and then the dried pellet is formed with an injection molding machine (NEX-1000 made by Nissei Plastic Industrial Co., Ltd.) at cylinder temperature 240°C and mold temperature 50°C to make a bending-test piece of 127 x 12.7 x 6.4mm. If the flexural modulus is less than the above-described range, white points might appear when the film made by coating a white film is installed as a light reflector in a liquid crystal display. If the flexural modulus is more than the above-described range, the light guide plate might be scratched when the light guide plate is rubbed with the light reflector. To adjust the flexural modulus of the thermoplastic resin in the above-described range, it is possible that the resin is copolymerized with polyalkylene glycol having a long chain. As to "HYTREL" made by Du Pont company, HYTREL 7247 or HYTREL 8238 as a thermoplastic resin including ether bond can be employed to achieve the flexural modulus in the above-described range.

For preparing the organic particles, it is possible to employ a method that the resin is heated to be melted and then is sprayed from a nozzle to make spherical particles (disclosed in JP2-12975-B), method that the resin is dissolved in heated solvent and then is cooled to precipitate spherical particles (disclosed in JP51-79158-A), method that the resin is heated to be melted and then is forced to disperse in heated immiscible polysiloxane (disclosed in JP2001-213970-A), method that high-molecule solution is separated into each phase to be emulsified and mixed with poor solvent to make fine particles (disclosed in WO2009/142231, JP application No. 2010-217158), or the like. From viewpoints of an easy control of particle size to minimize a particle diameter distribution index and an effective prevention of the particle-yellowing caused by melting to deteriorate thermally, it is preferable to employ the method that high-molecule solution is separated into each phase to be emulsified and mixed with poor solvent to make fine particles.

In the method for emulsifying by the phase-separation of high-molecule, it is preferable that the emulsification and microparticulation processes are carried out at 100°C or higher. As far as desirable fine particles are obtained by dissolving to separate each phase, the upper limit of temperature is not limited in particular. It is usual that the temperature to carry out the processes is 100 - 300°C. It is preferably 100 - 280°C, more preferably 120 - 260°C, further preferably 120 - 240°C, particularly preferably 120 - 220°C, and most preferably 120 - 200°C. Such a temperature makes it easy for fine particles having a small particle size distribution to be obtained.

If the emulsification and microparticulation processes are carried out at lower temperature, the particle shape might be made porous. However, it is preferable that the particle size distribution is further decreased to make true sphere particles by controlling as follows. Namely, the emulsification and microparticulation process are carried out at a temperature higher than the temperature-falling crystallization temperature which is one of characteristics of thermoplastic resin having ether bond, so that fine particles shaped into true spheres have a small particle size distribution.

The "temperature-falling crystallization temperature" means a crystallization temperature measured as an observed exothermic peak top by the differential scanning calorimetry method (DSC method) in a case that the temperature is increased once from 30°C to the temperature more than the melting point of the polymer plus 30°C at increase rate of 20°C/min, is maintained for one minute and then is decreased to 0°C at decrease rate of 20°C/min.

It is preferable that the thermoplastic resin fine particles having ether bond have 1 - 3 of particle diameter distribution index. It is more preferably 1 - 2, and most preferably 1 - 1.5. If the particle diameter distribution index is set in the above-described range, even under a condition where the light reflector is pressed onto the light guide plate white points caused by deformed larger particles closely attached to the light guide plate are prevented from tending to appear. It might be unfavorable from a viewpoint of coating appearance that the particle diameter distribution index is greater than the above-described range (namely in a case that coarse particles are contained). In such a case, it might be caused that Mayer bar has particle clogging to make coating streaks at a coating process. To set the particle diameter distribution index in the above-described range, it is preferable that the emulsification and microparticulation processes are carried out at 100°C or higher, in the above-described method that the solution is emulsified and mixed with poor solvent to make fine particles.

It is preferable that a number average particle diameter of the organic particles is $3\mu m$ or more and $60\mu m$ or less. It is more preferably $4\mu m$ or more and $20\mu m$ or less, and further preferably $5\mu m$ or more and $15\mu m$ or less. If it is less than $3\mu m$, white points might appear when the film made by coating a reflection film is installed in a liquid crystal display. If it is more than $60\mu m$, particles might drop off. To set the particle diameter in the above-described range, conventional methods can be employed. Specifically, the method disclosed in JP2001-213970-A or WO2009/142231 can be employed.

It is preferable that the organic particles are coated with binder resin. The organic particles can be coated with the binder resin to be prevented from dropping off. To coat the organic particles with the binder resin, it is preferable that the organic particles are made of thermoplastic resin including ether bond and the binder resin included in the coating liquid is a water-soluble resin. Further, it is effective for SRz/d to be made less than 300. It is more preferably 250 or less. The coating condition in the particle cross section can be observed with SEM or TEM. The ruthenium staining or the like would make the observation clearer.

In the laminated film according to the present invention, it is preferable that a density of the organic particle on the coating layer surface is 5 units/mm$^2$ or more and 100,000 units/mm$^2$ or less. It is more preferably 400 units/mm$^2$ or more and 100,000 units/mm$^2$ or less, and further preferably 1,000 units/mm$^2$ or more and 100,000 units/mm$^2$ or less. If the laminated film having such a particle density is applied as a light reflector or light diffusion film in a liquid crystal display, appropriate light diffusion can be exhibited. To achieve setting the particle density of the coating layer surface in the above-described range, it is possible that the particle amount in the coating liquid or coating film thickness is adjusted. As well, if the coating is performed at the same time of film forming, the stretch ratio can be adjusted at a stretching process after coating.

(3) Constitution of base film

The base film of the laminated film may be transparent or opaque. A transparent film may be polyester film, polyolefin film, polystyrene film, polyamide film or the like. From a viewpoint of easy forming, it is preferable to employ the polyester film. An opaque film may be a white film disclosed in JP4-239540-A or JP2004-330727-A, polyphenylene sulfide film disclosed in JP6-305019-A or the like. If the laminated film is employed as a light reflector of a liquid crystal display, it is preferable that the base film is a white film. From viewpoints of formability and cost saving, a white film made of polyester resin is preferably employed.

(4) Manufacturing method

A method for forming the coating layer may be an off-line coating method that a biaxially-stretched base film is coated with coating liquid or an in-line coating method that a film coated with coating liquid is stretched and heat treated. From viewpoints of cost-saving and coherency between the coating layer and the base film, the in-line coating method is preferable. The in-line coating method may be a method that an unstretched film coated on the surface with coating liquid is biaxially stretched or another method that a uniaxially-stretched film coated on the surface with coating liquid is further stretched in a direction crossing the uniaxially-stretching direction (direction perpendicular to the uniaxially stretching direction, for example). The latter method is preferable.

The latter method that a uniaxially-stretched film coated on the surface with coating liquid is further stretched in a direction crossing the uniaxially-stretching direction may be carried out as follows. At first, the supplied thermoplastic resin raw material is melted and extruded from a slit-shaped die on a rotating cooling drum with an extruder at a temperature higher than the melting point of the thermoplastic resin, so that a melting sheet is quenched on the surface of the rotating cooling drum to a temperature lower than the glass transition temperature so as to make an amorphous unstretched sheet. To improve the flatness on the sheet, it is preferable to enhance the coherency between the sheet and the rotation cooling drum. The coherency can be preferably achieved by the electrostatic attraction.

Ratio (SRz/d) of surface roughness (SRz) and coating thickness (d) on the coating layer surface after dried up is set to 12.5 or more by adjusting the diameter of the organic particle, the binder resin concentration of the coating liquid and the coating thickness of the coating liquid. Ratio (SRz/d) can be increased by lowering the solid content concentration of the coating liquid, thinning the coating thickness of the coating liquid, and increasing the diameter of the organic particle.

It is preferable that number average particle diameter R' of the organic particles contained in the coating liquid is 5μm or more. Such a range of R' can efficiently set coating layer surface roughness (SRz) and number average particle diameter R of the organic particles contained in the coating layer to 5μm or more. It is preferable that the organic particles contained in the coating liquid have 1 - 3 of particle diameter distribution index. Such a range of the index can efficiently set the particle diameter distribution index of the organic particles contained in the coating layer to 1 - 3. It is preferable that the organic particles contained in the coating liquid have a flexure modulus of 500MPa - 3,000MPa. Such a range of the flexure modulus can efficiently set the flexure modulus of the organic particles contained in the coating layer to 500MPa - 3,000MPa.

Next, the unstretched sheet is stretched in the lengthwise direction. The stretching temperature is usually set within the range from (the glass transition temperature of thermoplastic resin constituting the base film - 5°C) to (the glass transition temperature of thermoplastic resin constituting the base film + 25°C). The stretch ratio is usually set within the range of 3 - 6 times. The stretching can be carried out by one or more steps. Next, the film is coated with the coating liquid on at least one of surfaces. To coat the film with the coating liquid, a coating machine such as wire bar coater, reverse roll coater, gravure coater, rod coater, air doctor coater or the like can be used. The coating layer may be formed on one side only of the film and alternatively may be formed on both sides. If it is formed on one side only, the opposite side may be provided with another coating layer different from the above-described coating layer so that another characteristic is given as needed. To improve the coating liquid in coating property and adhesiveness to the film, it is possible that chemical treatment or electric discharge treatment are applied to the film before coated.

The coated film is preheated at 90 - 150°C in a preheating zone of the tenter to be dried up appropriately, and then is stretched in the width direction (which means a direction perpendicular to the lengthwise direction). The stretching temperature is usually set within the range from (the glass transition temperature of thermoplastic resin constituting the base film - 5°C) to (the glass transition temperature of thermoplastic resin constituting the base film + 40°C). The stretch ratio is usually set within the range of 3 - 6 times, and preferably 3.2 - 4.5 times. The film may be cooled down below the glass transition point in advance of the preheating.

Next, a heat treatment is carried out for 1 second to 5 minutes under a condition of constant length, or elongation/ shrinkage within 20%. To optimize the heat shrinkage in the lengthwise and/or width directions, it is possible that a relaxation treatment is carried out within 10% (preferably within 5%) in the lengthwise and/or width directions in the heat treatment process or after the heat treatment. The heat treatment temperature is usually 180 - 250°C, and preferably 190 - 230°C, though depending on the stretching condition. If the heat treatment temperature is higher than 250°C, the film orientation tends to decrease and the coating layer might be pyrolized partially. On the other hand, if the heat treatment temperature is lower than 180°C, the heat shrinkage of the film might be excessive.

The film according to the present invention can be suitably used as a light reflector. Particularly, it is suitable as a light reflector for a backlight. Above all, it is suitable as a light reflector for a sidelight-type backlight. The "sidelight-type backlight" comprises at least light source, light guide plate and light reflector, and may have a housing or the like. Though the light source is not limited in particular, CCFL or LED can be suitably employed as a light source. It is general that the light source is positioned at an edge part of the light guide plate.

(5) Measurement/evaluation methods

(5. 1) Measurement method of surface roughness (SRz), and ratio (SRz/d) of the surface roughness and coating thickness (d)

The measurement is performed according to JIS-B-0601 (2001). A surface roughness measuring instrument (model: SE3500) made by Kosaka Laboratory Ltd. is used. Measurement conditions are as follows.

- Feed speed: 0.1mm/s
- X-pitch :1.00$\mu$m
- Y-pitch: 5.0$\mu$m
- Z-measurement magnification: x 20,000
- Low level cut: 0.25mm

SRz is calculated with the following formula from SRz [$\mu$m] measured as described above and d [nm] obtained in (5. 2).

$$(SRz/d) = (SRz\ [\mu m]) \div (d\ [nm]) \times 1,000)$$

(5. 2) Measurement method of coating thickness (d) and evaluation method of coating condition in coating film of organic particles

The laminated film is cut with a microtome into a section of 70 - 100nm thickness along the cross-sectional direction and then is stained with ruthenium tetroxide. The stained section is enlarged by 500 to 10,000 times to be observed with a transmission electronic microscope "TEM2010" (made by JEOL Ltd.). The thickness of the coating layer without organic particles is measured with a cross-section photograph. 10 of randomly-selected points are measured and their average is determined to be a coating layer thickness.

Further, the coating condition in the coating film is observed with the cross-section photograph to be determined as follows.

A: All particles are coated with the coating layer.
B: 80% or more of particles are coated with the coating layer.
C: 40% or more of particles are coated with the coating layer.
D: Less than 40% of particles are coated with the coating layer.

(5. 3) Evaluation method of particle coherency

"TORAYSEE" MK cloth (registered trademark, made by Toray Industries, Inc.) is attached to a SUS block (300g in weight) on the bottom surface of 4cm x 4cm with a double-sided tape. The scraping test is carried out while the SUS block is slid on the coating surface of the laminated film for 10 times.

The glossinesses before and after the scraping test are compared to each other. The glossiness is measured with digital variable angle gloss meter UGV-5B (made by Suga Test Instruments Co., Ltd.) from the coating layer side of the laminated film according to JISZ-8741 (1997). The measurement is performed at a condition where the incidence angle = 60° and the light-receiving angle = 60°. The glossiness is measured by five samples each (n = 5) and their average is calculated. The dropping trace is observed with SEM photograph of the surface at 100 points (total of the number of particles + dropping trace), and then is evaluated according to the following standard.

A: No dropping trace is observed.

B: 5 or less dropping traces are observed.
C: 10 or less dropping traces are observed.
D: 30 or less dropping traces are observed.
E: More than 30 dropping traces are observed.

(5. 4. 1) Measurement method of number average particle diameter R, volume average particle diameter and particle diameter distribution index, of organic particles in coating layer

Particles in the coating layer provided on the laminated film are observed with a scanning electronic microscope (SEM JSM-6301NF made by JEOL Ltd.) to determine a particle diameter. If the particle is not a true sphere, the major axis is regarded as particle diameter. Diameters of 100 randomly-selected particles are measured to determine number average particle diameter R (Dn) and volume average particle diameter (Dv). Particle diameter Distribution Index (PDI) is calculated by following Formula (1).

$$PDI = Dv / Dn \ ... \ (1)$$

Dn: number average particle diameter
Dv: volume average particle diameter
PDI: particle diameter distribution index

(5. 4. 2) Measurement method of number average particle diameter R', volume average particle diameter and particle diameter distribution index, of organic particles contained in coating liquid

Particles are observed with a scanning electronic microscope (SEM JSM-6301NF made by JEOL Ltd.) to determine a particle diameter. If the particle is not a true sphere, the major axis is regarded as the particle diameter. Diameters of 100 randomly-selected particles are measured to determine number average particle diameter R' (Dn) and volume average particle diameter (Dv). Particle diameter Distribution Index (PDI) is calculated by following Formula (1).

$$PDI = Dv / Dn \ ... \ (1)$$

Dn: number average particle diameter
Dv: volume average particle diameter
PDI: particle diameter distribution index

(5. 5) Evaluation method of coating appearance

Appearances of the laminated films obtained in Examples or Comparative Examples are observed with reflection light from a fluorescent lamp. The evaluation standards are as follows.

A: Neither coating unevenness nor coating defects are observed.
B: Although coating unevenness or coating defects are partially observed, no unevenness is observed when lit up if the laminated film is installed as setting the screen in the horizontal position in a backlight unit of LED display (T240HW01) made by AU Optronics Corp.
C: While coating unevenness or coating defects are partially observed, slight unevenness is observed when lit up if the laminated film is installed as setting the screen in the horizontal position in a backlight unit of LED display (T240HW01) made by AU Optronics Corp.
D: Coating unevenness and coating defects are observed so that the appearance is substantially deteriorated.

To evaluate the coating appearance, A and B are regarded as good, and D is regarded as unpractical.

(5. 6) Evaluation method of white points in display

The laminated film is installed as setting the screen in the horizontal position in a backlight unit of LED display (T240HW01) made by AU Optronics Corp and is lit up. The condition of the screen pressed on the center with a predetermined weight is evaluated according to the following standards.

F: White points appear with no weight.
E: White points appear with 0.5kg weight.
D: White points appear with 1.0kg weight.
C: White points appear with 1.5kg weight.
B: White points appear with 2.0kg weight.
A: White points do not appear even with 2.0kg weight.

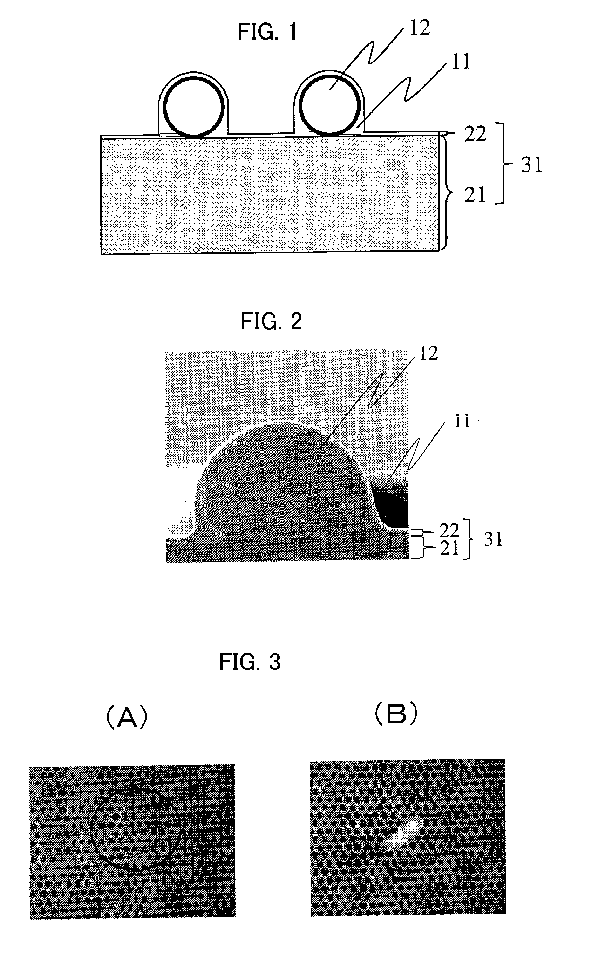

Besides, the backlight used is a sidelight-type backlight which has a light guide plate and a light source (LED) positioned at an edge part of the light guide plate. In the evaluation method of white points, a case (Fig. 3 (A)) without white points and another case (Fig. 3 (B)) with white points are clearly distinguished as shown with white points evaluation example depicted in Fig. 3.

(5. 7) Measurement method of R/d

R/d is calculated by the following formula from number average particle diameter (Dn) [$\mu$m] shown in (5. 4. 1) and thickness (d) [nm] shown in (5. 2).

$$R/d = Dn \ [\mu m] \ /d \ [nm] \ x \ 1,000$$

(5. 8) Measurement method of particle density of organic particles

The surface of the laminated film is observed with a scanning electronic microscope (SEM JSM-6301NF made by JEOL Ltd.) to count number N of particles with 10 fields of 250$\mu$m x 400$\mu$m view. Number N is determined to be a particle density [unit/mm$^2$] of the organic particles.

(5. 9. 1) Measurement method of flexure modulus of organic particles contained in coating layer

Organic particles are extracted from the laminated film and molded in a size of 127mm x 12.7mm x 3.2mm to measure the flexure modulus according to ASTM-D790-98. Either of the following method is employed to extract it from the laminated film so that the content of components except for the organic particles is 5% by weight or less.

(1) The organic particles are extracted from the coating layer on the laminated film surface with solvent such as ethanol to be dried up.
(2) The organic particles are extracted by scraping the organic particles from the laminated film surface with a single edged knife or the like.

(5. 9. 2) Measurement method of flexure modulus of organic particles contained in coating liquid

Organic particles are extracted from the laminated film and molded in a size of 127mm x 12.7mm x 3.2mm to measure the flexure modulus according to ASTM-D790-98.

(5.10) Evaluation method of diffusibility

The glossiness of the laminated film is measured with digital variable angle gloss meter UGV-5B (made by Suga Test Instruments Co., Ltd.) from the coating layer side of the laminated film according to JISZ-8741 (1997). The measurement is performed at a condition where the incidence angle = 85° and the light-receiving angle = 85°. The glossiness is measured by five samples each (n = 5) and their average is calculated. It may be preferable that the glossiness is low at 85° of incidence angle for both the reflection film and diffusion film particularly in a sidelight-type backlight system, and therefore the diffusibility is evaluated based on the glossiness as follows.

A: The glossiness (85°) is less than 30.
B: The glossiness (85°) is 30 or more and less than 80.
C: The glossiness (85°) is 80 or more and less than 100.
D: The glossiness (85°) is 100 or more.

[Examples]

Hereinafter, the present invention will be explained specifically with reference to Examples or the like although the present invention is not limited to thereto.

[Raw materials]

(1) White film as base film

- PET (polyethylene terephthalate)

With respect to polyester pellet made from terephthalic acid as an acid component and ethylene glycol as a glycol component, antimony trioxide (polymerization catalyst) is added by 300ppm in terms of antimonial atom to make polyethylene terephthalate pellet (PET) of limiting viscosity 0.63dl/g through polycondensation. The glass transition temperature of obtained PET is 80°C.

- Cyclic olefin copolymer resin

Cyclic olefin resin "TOPAS" (registered trademark, made by Polyplastic Co., Ltd.) of glass transition temperature 178°C and of MVR (260°C/2.16kg) 4.5ml/10min is employed as an immiscible component.

(2) Coating liquid for forming coating layer

- Polyester-based binder resin (material A-1)

"PESRESIN" A-215E (solid content concentration 30 %: including carboxylic acid group and hydroxyl group: made by Takamatsu Oil & Fat Co., Ltd.) is diluted by purified water, to prepare 25% by weight solution.

- Polyester-based binder resin (material A-2)

With terephthalic acid dimethyl of 28.3 parts by weight, isophthalic acid dimethyl of 23.3 parts by weight, adipic acid dimethyl of 12.7 parts by weight, 5-sodium sulfoisophthalic acid dimethyl of 7.5 parts by weight, ethylene glycol of 37.3 parts by weight, diethylene glycol of 17.5 parts by weight, acetic acid magnesium of 0.035 parts by weight and lithium acetate of 0.3 parts by weight, transesterification reaction is carried out in the usual way. Then 10ppm of titanium compound (catalyser A) as Ti element and 0.035 parts by weight of triethyl phosphonoacetate are added to the polymer. Next, after gradually the temperature is increased to 280°C and the pressure is decreased below 1mmHg, copolymerized polyester (including sulfonate (sodium sulfonate) and hydroxyl group) is obtained by the polycondensation reaction. Thus obtained copolymerized polyester is dissolved in distilled water to make 25% by weight solution.

- Surfactant (material B)

"NOVEC (registered trademark)" FC-4430 (made by Ryoko Chemical Co., Ltd., 5% by weight solution) is employed.

- Organic particle (material C)

28g of polyether ester ("HYTREL (registered trademark)" 7247, made by Du Pont-Toray Co., Ltd., weight average molecular weight 29,000, flexure modulus 600MPa), 304.5g of N-methyl-2-pyrrolidone (made by Kanto Chemical Co., Inc.) and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 26.5g of white solid. As a result of analyzing thus obtained white solid with a laser particle size analyzer (made by Shimadzu Corporation, SALD-2100), it is determined to be polyether ester fine particles of number average particle diameter 4.9$\mu$m, volume average particle diameter 5.5$\mu$m, particle diameter

distribution index 1.12. Thus obtained fine particles are mixed with purified water to make 40% by weight of water dispersion as material C. The material is determined to be made of true spherical fine particles by observing with a scanning electronic microscope. The melting point of this polyether ester is 218°C and temperature-falling crystallization temperature of this polyether ester is 157°C.

- Organic particle (material D)

28g of polyether ester ("HYTREL (registered trademark)" 7247, made by Du Pont-Toray Co., Ltd., weight average molecular weight 29,000, flexure modulus 600MPa), 308g of N-methyl-2-pyrrolidone (made by Kanto Chemical Co., Inc.) and 14g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 25.5g of white solid. As a result of analyzing thus obtained white solid with a laser particle size analyzer (made by Shimadzu Corporation, SALD-2100), it is determined to be polyether ester fine particles of number average particle diameter $7.0\mu m$, volume average particle diameter $8.6\mu m$, particle diameter distribution index 1.23. Thus obtained fine particles are mixed with purified water to make 40% by weight of water dispersion as material D. The material is determined to be made of true spherical fine particles by observing with a scanning electronic microscope. The melting point of this polyether ester is 218°C and temperature-falling crystallization temperature of this polyether ester is 157°C.

- Organic particle (material E)

28g of polyether ester ("HYTREL (registered trademark)" 7247, made by Du Pont-Toray Co., Ltd., weight average molecular weight 29,000, flexure modulus 600MPa), 301g of N-methyl-2-pyrrolidone (made by Kanto Chemical Co., Inc.) and 10.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 26.0g of white solid. As a result of analyzing thus obtained white solid with a laser particle size analyzer (made by Shimadzu Corporation, SALD-2100), it is determined to be polyether ester fine particles of number average particle diameter $9.8\mu m$, volume average particle diameter $12.5\mu m$, particle diameter distribution index 1.28. Thus obtained fine particles are mixed with purified water to make 40% by weight of water dispersion as material E. The material is determined to be made of true spherical fine particles by observing with a scanning electronic microscope. The melting point of this polyether ester is 218°C and temperature-falling crystallization temperature of this polyether ester is 157°C.

- Organic particle (material F)

TECHPOLYMER MBX-8 (cross-linked PMMA particle, number average particle diameter $8\mu m$, volume average particle diameter $11.7\mu m$, particle diameter distribution index 1.46, made by Sekisui Plastics Co.,Ltd.) is mixed with purified water to make 40% by weight of water dispersion as material F. Besides, material F does not include ether bond in a particle.

- Organic particle (material G)

33.25g of polyether ester ("HYTREL (registered trademark)" 8238, made by Du Pont Co., Ltd., weight average molecular weight 27,000, flexure modulus 1,100MPa), 299.25g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 28.3g of white solid. As a result of observing thus obtained powder with a scanning electronic microscope, it is determined to be true spherical fine particles made of polyether ester fine particles of number average particle diameter $12.0\mu$m, volume average particle diameter $14.7\mu$m, particle diameter distribution index 1.23. As a result of observing thus obtained powder with a scanning electronic microscope, it is determined to be true spherical fine particles. The melting point of this polyether ester is 224°C and temperature-falling crystallization temperature of this polyether ester is 161°C. Thus obtained fine particles are mixed with purified water to make 40% by weight of water dispersion as material G.

- Organic particle (material H)

The following (A1), (A2) and (B1) are mixed by proportion (A1):(A2):(B1) = 55:15:30 to be kneaded with LABO PLASTMILL at 240°C and 50rpm for 10 minutes, to make a kneaded material.

(A1) Water-soluble polysaccharide (made by Nihon Shokuhin Kako Co., Ltd., CLUSTER DEXTRIN)
(A2) Water-soluble plasticization component: sugar alcohol (sorbitol) (made by Towa Chemical Industry Co., Ltd., SORBIT, melting point 103°C)
(B1) Polyether ester ("HYTREL (registered trademark)" 8238, made by Du Pont Co., Ltd., weight average molecular weight 27,000, flexure modulus 1,100MPa)

Thus obtained kneaded material is taken out to be cooled to dissolve the matrix component by immersed in 10 times by weight of pure water. Thus obtained particle-dispersion water solution is filtered with a membrane filter made of cellulose acetate of pore size $0.45\mu$m. Particles collected on the membrane filter are dispersed again in 10 times of pure water, and then are washed as stirred for 30 minutes, to be filtered again. Such washing operations are repeated twice. The sample washed twice is dried up in an oven at 45°C around the clock to make fine particles (C1). Number average particle diameter of thus obtained particles (C1) is $70\mu$m. Thus obtained particles (C1) and the above-described particles (material G) are mixed by weight proportion (C1):(material G) = 2:98, to make material H. As a result of observing the powder of material H with a scanning electronic microscope, it is determined to be true spherical fine particles made of polyether ester fine particles of number average particle diameter $14.2\mu$m, volume average particle diameter $64.5\mu$m, particle diameter distribution index 4.54. Thus obtained fine particles are mixed with purified water to make 40% by weight of water dispersion as material H.

- Organic particle (material I)

3.5g of polyether ester ("HYTREL (registered trademark)" 3046, made by Du Pont-Toray Co., Ltd., weight average molecular weight 23,000, flexure modulus 20MPa) and organic solvent consisting of 43g of N-methyl-2-pyrrolidone and 3.5g of polyvinyl alcohol (made by Nippon Gohsei Co., Ltd., "GOHSENOL (registered trademark)" GL-05) are heated to 90°C in a four-neck flask having 100ml volume, to be stirred until the polymer dissolves. After the temperature is got back to 80°C, 50g of ion exchanged water as a poor solvent is dropped at speed of 0.41g/min through a tubing pump as stirred at 450rpm. After having finished pouring the water of the gross quantity, the solution is stirred for 30 minutes and the obtained suspension liquid is filtered to be washed with 100g of ion exchange water. And then it is dried up under vacuum at 80°C for 10 hours to make 3.1g of white solid. As a result of observing thus obtained powder with a scanning electronic microscope, it is determined to be true spherical fine particles made of polyether ester fine particles of number average particle diameter $13.2\mu$m, volume average particle diameter $15.4\mu$m, particle diameter distribution index 1.17. After observing it by a scanning electron microscope, it was truth spherical fine particles. Thus obtained fine particles are mixed with purified water to make 40% by weight of water dispersion as material I.

- Organic particle (material J)

The following (A1), (A2) and (B1) are mixed by proportion (A1):(A2):(B1) = 55:15:30 to be kneaded with LABO PLASTMILL at 240°C and 50rpm for 10 minutes, to make a kneaded material.

(A1) Water-soluble polysaccharide (made by Nihon Shokuhin Kako Co., Ltd., CLUSTER DEXTRIN)
(A2) Water-soluble plasticization component: sugar alcohol (sorbitol) (made by Towa Chemical Industry Co., Ltd., SORBIT, melting point 103°C)
(B1) Polyether ester ("HYTREL (registered trademark)" 8238, made by Du Pont Co., Ltd., weight average molecular weight 27,000, flexure modulus 1,100MPa)

Thus obtained kneaded material is taken out to be cooled to dissolve the matrix component by immersed in 10 times by weight of pure water. Thus obtained particle-dispersion water solution is filtered with a membrane filter made of cellulose acetate of pore size 0.45μm. Particles collected on the membrane filter are dispersed again in 10 times of pure water, and then are washed as stirred for 30 minutes, to be filtered again. Such washing operations are repeated twice. The sample washed twice is dried up in an oven at 45°C around the clock to make fine particles (C1). Number average particle diameter of thus obtained particles (C1) is 70μm. Thus obtained particles (C1) and the above-described particles (material G) are mixed by weight proportion (C1):(material G) = 0.3:99.7, to make material H. As a result of observing the powder of material H with a scanning electronic microscope, it is determined to be true spherical fine particles made of polyether ester fine particles of number average particle diameter 11.4μm, volume average particle diameter 34.2μm, particle diameter distribution index 3.00. Thus obtained fine particles are mixed with purified water to make 40% by weight of water dispersion as material J.

- Organic particle (materials K): Synthesis of aliphatic polyether ester (D1)

48.0 parts of terephthalic acid, 42.0 parts of 1,4-butanediol, 10.0 parts of polytetramethylene glycol having weight average molecular weight of approximately 3,000, 0.01 parts of titanium tetrabutoxide and 0.005 parts of mono-n-butyl-monohydroxy tin oxide are mixed in a reaction container provided with a helical ribbon impeller and are heated at 190 - 225°C for three hours and then the esterification reaction is carried out as distilling the reaction water out of a system. 0.06 parts of tetra-n-butyl titanate and 0.02 parts of "IRGANOX" 1098 (made by Ciba Japan K.K., hindered phenol-based antioxidant) are added to the reacted mixture and heated to 245°C and subsequently the inner pressure is gradually reduced to 30Pa over 50 minutes. Under this condition the polymerization is carried out for 2 hours and 50 minutes to make aliphatic polyether ester (D1). The melting point is 226°C, the weight average molecular weight is 28,000, and the flexure modulus is 1,800MPa.

33.25g of polyether ester (D1), 299.25g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 28.3g of white solid. As a result of observing thus obtained powder with a scanning electronic microscope, it is determined to be true spherical fine particles made of polyether ester fine particles of number average particle diameter 12.0μm, volume average particle diameter 14.7μm, particle diameter distribution index 1.23. As a result of observing thus obtained powder with a scanning electronic microscope, it is determined to be true spherical fine particles. Thus obtained fine particles are mixed with purified water to make 40% by weight of water dispersion as material K.

- Organic particle (material L)

14.6g of polyether ester ("HYTREL (registered trademark)" 8238, made by Du Pont Co., Ltd., weight average molecular weight 27,000, flexure modulus 1,100MPa), 300g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 12.4g of white solid. As a result of observing thus obtained powder with a scanning electronic microscope, it is determined to be true spherical fine particles made of polyether ester fine particles of number average particle diameter 1.5μm, volume average particle diameter 1.8μm, particle diameter distribution index 1.20. Thus obtained fine particles are mixed with purified water to make 40% by weight of water dispersion as material L.

- Organic particle (material M)

15.2g of polyether ester ("HYTREL (registered trademark)" 8238, made by Du Pont Co., Ltd., weight average molecular weight 27,000, flexure modulus 1,100MPa), 300g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 12.9g of white solid. As a result of observing thus obtained powder with a scanning electronic microscope, it is determined to be true spherical fine particles made of polyether ester fine particles of number average particle diameter 2.2μm, volume average particle diameter 2.7μm, particle diameter distribution index 1.23. Thus obtained fine particles are mixed with purified water to make 40% by weight of water dispersion as material M.

- Organic particle (material N)

17.5g of polyether ester ("HYTREL (registered trademark)" 8238, made by Du Pont Co., Ltd., weight average molecular weight 27,000, flexure modulus 1,100MPa), 315g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 14.9g of white solid. As a result of observing thus obtained powder with a scanning electronic microscope, it is determined to be true spherical fine particles made of polyether ester fine particles of number average particle diameter 4.3μm, volume average particle diameter 5.4μm, particle diameter distribution index 1.26. Thus obtained fine particles are mixed with purified water to make 40% by weight of water dispersion as material N.

- Organic particle (material O)

26.7 parts of terephthalic acid, 23.3 parts of 1,4-butanediol, 50.0 parts of polytetramethylene glycol having weight average molecular weight of approximately 3,000, 0.01 parts of titanium tetrabutoxide and 0.005 parts of mono-n-butyl-monohydroxy tin oxide are mixed in a reaction container provided with a helical ribbon impeller and are heated at 190 - 225°C for three hours and then the esterification reaction is carried out as distilling the reaction water out of a system. 0.06 parts of tetra-n-butyl titanate and 0.02 parts of "IRGANOX" 1098 (made by Ciba Japan K.K., hindered phenol-based antioxidant) are added to the reacted mixture and heated to 245°C and subsequently the inner pressure is gradually reduced to 30Pa over 50 minutes. Under this condition the polymerization is carried out for 2 hours and 50 minutes to make aliphatic polyether ester (D2). The melting point is 210°C, the weight average molecular weight is 28,000, and the flexure modulus is 450MPa.

Then, 33.25g of polyether ester (D2), 299.25g of N-methyl-2-pyrrolidone and 17.5g of polyvinyl alcohol (made by Wako Pure Chemical Industries Ltd., PVA -1500, weight average molecular weight 29,000: sodium acetate content has been reduced to 0.05wt% by washing with methanol) are heated to 180°C after nitrogen purge in a pressure-resistant glass autoclave (made by Taiatsu Techno Corporation, "HYPER GLASTER" TEM-V1000N) having 1,000ml volume, to be stirred for four hours until the polymer dissolves. 350g of ion exchanged water as a poor solvent is dropped at speed of 2.92g/min through a tubing pump. After having finished pouring the water of the gross quantity, the temperature is reduced while stirred to obtain a suspension to be filtered. Then 700g of ion exchange water is added and is subjected to the re-slurry washing. And then it is filtered and is dried up under vacuum at 80°C for 10 hours to make 28.3g of white solid. As a result of observing thus obtained powder with a scanning electronic microscope, it is determined to be true spherical fine particles made of polyether ester fine particles of number average particle diameter 12.0μm, volume average particle diameter 14.7μm, particle diameter distribution index 1.23. As a result of observing thus obtained powder with a scanning electronic microscope, it is determined to be true spherical fine particles. Thus obtained fine particles are mixed with purified water to make 40% by weight of water dispersion as material O.

[Example 1]

(1) Preparation of coating liquid

The following materials are added as raw materials of a coating liquid in the order from 1) to 4) and then stirred with a universal mixer for 10 minutes to prepare a coating liquid.

1) Purified water: 67.3 parts by weight
2) Material A-1: 17.1 parts by weight
3) Material B: 0.6 parts by weight
4) Material D: 15.0 parts by weight

(2) Film forming

Mixture of 80 parts by weight of PET and 20 parts by weight of cyclic olefin copolymer resin is dried up under vacuum at 180°C for three hours and then supplied to extruder A to be melted and extruded at 280°C. On the other hand, 100 parts by weight of PET is dried up under vacuum at 180°C for three hours and then supplied to extruder B to be melted and extruded at 280°C. Confluent resins extruded from extruders A and B are laminated in the order of B/A/B in the thickness direction, and delivered to T-die.

Next, the resins are extruded from T-die to form a melt laminated sheet, and the melt laminated sheet is cooled and solidified by being attached with electrostatic attraction closely to a drum surface maintained at 25°C, to make an unstretched laminated film. Here, the film surface contacting the drum is called "bottom side" while the surface exposed to the air is called "top side". After the unstretched laminated film is preheated with a group of rolls (preheating rolls) at 80°C successively, it is stretched by 3.5 times in the lengthwise direction with a circumferential roll speed difference and cooled with a group of rolls at 25°C to make a uniaxially-stretched film.

Next, the top side of the uniaxially-stretched film is subjected to the corona discharge processing in the air and the processed surface is coated with the coating liquid for forming the coating layer by the bar coating method with a wire bar.

While both ends of the uniaxially-stretched film coated with the coating liquid for forming the coating layer are gripped with clips, the film is dried up at 100°C in a preheating zone of the tenter and then is successively stretched by 3.5 times in the lateral direction (perpendicular to the lengthwise direction) at 100°C in a heating zone. Successively, after the film is heat treated at 190°C in a heat-treating zone of the tenter and then is relaxed by 6% in the lateral direction at 190°C, the film is gradually cooled uniformly and then is rolled up to make a white laminated film provided with a coating layer of 200nm thickness on the film of 188$\mu$m thickness. The film thickness of layer B is 10$\mu$m. Table 1 shows the composition of the coating liquid for forming the coating layer, and Table 2 shows the evaluation result of characteristics of thus obtained laminated film.

[Table 1]

| | Coating agent composition (part by weight) | | | | | | | | | | | | | | | | |
|---|---|---|---|---|---|---|---|---|---|---|---|---|---|---|---|---|---|
| | Water | A-1 | A-2 | B | C | D | E | F | G | H | I | J | K | L | M | N | O |
| Example 1 | 67.3 | 17.1 | - | 0.6 | - | 15.0 | - | - | - | - | - | - | - | - | - | - | - |
| Example 2 | 80.5 | 4.3 | - | 0.2 | - | - | 15.0 | - | - | - | - | - | - | - | - | - | - |
| Example 3 | 49.6 | 34.2 | - | 1.2 | 15.0 | - | - | - | - | - | - | - | - | - | - | - | - |
| Example 4 | 67.3 | 17.1 | - | 0.6 | - | - | - | - | 15.0 | - | - | - | - | - | - | - | - |
| Example 5 | 67.3 | 17.1 | - | 0.6 | - | - | - | - | - | - | 15.0 | - | - | - | - | - | - |
| Example 6 | 67.3 | 17.1 | - | 0.6 | - | - | - | - | - | 15.0 | - | - | - | - | - | - | - |
| Example 7 | 67.3 | - | 17.1 | 0.6 | - | - | - | - | 15.0 | - | - | - | - | - | - | - | - |
| Example 8 | 40.7 | 42.8 | - | 1.5 | - | - | - | - | 15.0 | - | - | - | - | - | - | - | - |
| Example 9 | 79.8 | 5.0 | - | 0.2 | - | - | - | - | 15.0 | - | - | - | - | - | - | - | - |
| Example 10 | 76.1 | 8.6 | - | 0.3 | - | - | - | - | - | - | - | - | - | 15.0 | - | - | - |
| Example 11 | 49.6 | 34.2 | - | 1.2 | - | - | - | - | - | - | - | - | - | - | - | 15.0 | - |
| Example 12 | 70.8 | 13.7 | - | 0.5 | - | - | - | - | - | - | - | - | - | - | 15.0 | - | - |
| Example 13 | 67.3 | 17.1 | - | 0.6 | - | - | - | - | - | - | - | 15.0 | - | - | - | - | - |
| Example 14 | 67.3 | 17.1 | - | 0.6 | - | - | - | - | - | - | - | - | 15.0 | - | - | - | - |
| Example 15 | 81.5 | 3.4 | - | 0.1 | - | - | 15.0 | - | - | - | - | - | - | - | - | - | - |
| Example 16 | 81.5 | 3.4 | - | 0.1 | - | - | - | - | - | - | - | - | - | - | - | - | 15.0 |
| Example 17 | 49.6 | 34.2 | - | 1.2 | 15.0 | - | - | - | - | - | - | - | - | - | - | - | - |
| Comparative Example 1 | 67.3 | 17.1 | - | 0.6 | - | - | - | 15.0 | - | - | - | - | - | - | - | - | - |
| Comparative Example 2 | 31.9 | 51.3 | - | 1.8 | 15.0 | - | - | - | - | - | - | - | - | - | - | - | - |
| Comparative Example 3 | 31.9 | 51.3 | - | 1.8 | - | - | - | - | 15.0 | - | - | - | - | - | - | - | - |

[Table 2]

| | Characteristics of particle included in coating fluid | | | Characteristics of particle | | | Characteristic evaluation of laminated film | | | | | | | | | Evaluation of particle coherency | | |
|---|---|---|---|---|---|---|---|---|---|---|---|---|---|---|---|---|---|---|---|
| | Flexural modulus (MPa) | Number average particle diameter (μm) | Particle diameter distribution index | Flexural modulus (MPa) | Number average particle diameter (μm) | Particle diameter distribution index | Coating state of organic particle | Surface roughness SRz (μm) | Coating layer thickness d (nm) | SRz/d | R/d | Organic particle density (unit/mm²) | Evaluation of display white point | Coating appearance | Light diffusion characteristics | Glossiness before scraping test | Glossiness after scraping test | Observation of dropping trace |
| Example 1 | 600 | 7.0 | 1.23 | 600 | 7.0 | 1.23 | A | 8 | 200 | 40 | 35.0 | 3659 | D | A | A | 74 | 74 | A |
| Example 2 | 600 | 9.8 | 1.28 | 600 | 9.8 | 1.28 | B | 12 | 50 | 240 | 196.0 | 316 | C | A | C | 74 | 79 | B |
| Example 3 | 600 | 4.9 | 1.12 | 600 | 4.9 | 1.12 | A | 5 | 400 | 12.5 | 12.3 | 19435 | D | A | A | 74 | 74 | A |
| Example 4 | 1100 | 12.0 | 1.23 | 1100 | 12.0 | 1.23 | A | 14 | 200 | 70 | 60.0 | 697 | A | A | B | 74 | 79 | A |
| Example 5 | 20 | 13.2 | 1.17 | 20 | 13.2 | 1.17 | A | 15 | 200 | 75 | 66.0 | 461 | E | A | B | 76 | 87 | A |
| Example 6 | 600 | 14.2 | 4.54 | 600 | 14.2 | 4.54 | A | 16 | 200 | 80 | 71.0 | 429 | E | B | B | 85 | 92 | A |
| Example 7 | 1100 | 12.0 | 1.23 | 1100 | 12.0 | 1.23 | A | 14 | 200 | 70 | 60.0 | 705 | A | A | B | 72 | 78 | B |
| Example 8 | 1100 | 12.0 | 1.23 | 1100 | 12.0 | 1.23 | A | 12.5 | 1000 | 12.5 | 12.0 | 3273 | A | B | A | 63 | 63 | A |
| Example 9 | 1100 | 12.0 | 1.23 | 1100 | 12.0 | 1.23 | B | 14.5 | 58 | 250 | 206.9 | 191 | A | C | C | 74 | 95 | C |
| Example 10 | 1100 | 1.5 | 1.20 | 1100 | 1.5 | 1.20 | A | 1.25 | 100 | 12.5 | 15.0 | 95592 | E | A | A | 70 | 73 | A |
| Example 11 | 1100 | 4.3 | 1.26 | 1100 | 4.3 | 1.26 | A | 5 | 400 | 12.5 | 10.8 | 29216 | B | A | A | 75 | 76 | A |
| Example 12 | 1100 | 2.2 | 1.23 | 1100 | 2.2 | 1.23 | A | 2 | 160 | 12.5 | 13.8 | 86065 | E | A | A | 72 | 75 | A |
| Example 13 | 1100 | 11.4 | 3.00 | 1100 | 11.4 | 3.00 | A | 14 | 200 | 70 | 57.0 | 831 | B | B | B | 74 | 77 | B |
| Example 14 | 1800 | 12.0 | 1.23 | 1800 | 12.0 | 1.23 | A | 14 | 200 | 70 | 60.0 | 573 | A | A | B | 74 | 76 | A |
| Example 15 | 600 | 9.8 | 1.28 | 600 | 9.8 | 1.28 | C | 12 | 40 | 300 | 245.0 | 236 | C | C | C | 74 | 115 | D |
| Example 16 | 450 | 12.0 | 1.23 | 450 | 12.0 | 1.23 | A | 14 | 200 | 70 | 60.0 | 643 | E | A | B | 74 | 77 | A |
| Example 17 | 600 | 4.9 | 1.12 | 600 | 4.9 | 1.12 | A | 5 | 400 | 12.5 | 12.3 | 21146 | - | A | A | 74 | 74 | A |
| Comparative Example 1 | 3100 | 8.0 | 1.46 | 3100 | 8.0 | 1.46 | D | 8 | 200 | 40 | 40.0 | 2557 | D | D | A | 71 | 120 | E |
| Comparative Example 2 | 600 | 4.9 | 1.12 | 600 | 4.9 | 1.12 | A | 4 | 1200 | 3.3 | 4.1 | 50095 | E | D | A | 55 | 65 | B |
| Comparative Example 3 | 1100 | 12.0 | 1.23 | 1100 | 12.0 | 1.23 | A | 12 | 1200 | 10 | 10.0 | 4153 | A | D | A | 30 | 45 | B |

Fig. 1 shows a schematic section of laminated film 31 obtained in the example. Fig. 2 shows SEM-observation of a cross section of laminated film 31 around organic particles 12 contained in coating layer 22. Laminated film 31 consists of base film 21 and coating layer 22 on its surface while coating layer 22 contains binder resin 11 and organic particles. Organic particles 12 are coated with binder resin 11 to bury organic particles 12 inside and therefore are not exposed on the surface of coating layer 22.

[Examples 2 to 16]

A film is formed to make a white laminated film of 188$\mu$m thickness at the same condition as Example 1, except that the composition of the coating liquid for forming the coating layer is conditioned as shown in Table 1 and the thickness of the coating layer is set as shown in Table 2. Table 2 shows film characteristics. The coating appearances are all good, and few particles dropped off.

[Example 17]

PET is dried up under vacuum at 180°C for three hours and then supplied to extruder A to be melted and extruded at 280°C, and is introduced into T-die. Next, it is extruded from the T-die to form a melt laminated sheet, and the melt laminated sheet is cooled and solidified by attached with electrostatic attraction closely to a drum surface maintained at 25°C, to make an unstretched laminated film. Here, the film surface contacting the drum is called "bottom side" while the surface exposed to the air is called "top side". After the unstretched laminated film is preheated with a group of rolls (preheating rolls) at 80°C successively, it is stretched by 3.0 times in the lengthwise direction with a circumferential roll speed difference and cooled with a group of rolls at 25°C to make a uniaxially-stretched film. Next, the top side of the uniaxially-stretched film is subjected to the corona discharge processing in the air and the processed surface is coated with the coating liquid for forming the coating layer by the bar coating method with a wire bar. While both ends of the uniaxially-stretched film coated with the coating liquid for forming the coating layer are gripped with clips, the film is dried up at 100°C in a preheating zone of the tenter and then is successively stretched by 3.5 times in the lateral direction (perpendicular to the lengthwise direction) at 100°C in a heating zone. Successively, after the film is heat treated at 190°C in a heat-treating zone of the tenter and then is relaxed by 2% in the lateral direction at 190°C, the film is gradually cooled uniformly and then is rolled up to make a laminated film provided with a coating layer of 300nm thickness on the transparent film of 188$\mu$m thickness. The composition of the coating liquid for forming the coating layer is the same as Example 3. Thus obtained laminated film has characteristics, such as 4.9$\mu$m of number average particle diameter, 1.10 of particle distribution index, A-level of coating condition of particle, 5$\mu$m of surface roughness SRz, 400nm of coating layer thickness d, 12.5 of SRz/d, 12.3 of R/d, and A-level of coating appearance. The laminated film exhibits excellent light diffusion.

[Comparative Example 1]

A film is formed to make a white laminated film of 188$\mu$m thickness at the same condition as Example 1, except that the composition of the coating liquid for forming the coating layer is conditioned as shown in Table 1 and the thickness of the coating layer is set as shown in Table 2. Table 2 shows film characteristics. Some particles dropped off from the film in Comparative Example 1.

[Comparative Examples 2 to 3]

A film is formed to make a white laminated film of 188$\mu$m thickness at the same condition as Example 1, except that the composition of the coating liquid for forming the coating layer is conditioned as shown in Table 1 and the thickness of the coating layer is set as shown in Table 2. Table 2 shows film characteristics. The coating property is so bad that there are some parts left uncoated.

Industrial Applications of the Invention

The laminated film according to the present invention is applicable to a light reflector by providing a coating layer on a white base film, and is also applicable to a light diffuser by providing a coating layer on a transparent base film.

Explanation of symbols

11:    binder resin

12:   organic particle
21:   base film
22:   coating layer
31:   laminated film

**Claims**

1.  A laminated film comprising a base film and a coating layer, which contains organic particles and is provided on a surface of the base film, wherein a ratio (SRz/d) of a surface roughness (SRz) and a coating thickness (d) on a surface of the coating layer is 12.5 or more, **characterized in that** the organic particle is made of a thermoplastic resin including an ether bond while the coating layer is made of a binder resin including at least one selected from a sulfonic acid group, a carboxylic acid group, a hydroxyl group and a salt of them.

2.  A laminated film comprising a base film and a coating layer, which contains organic particles and is provided on a surface of the base film, wherein a ratio (R/d) of a number average particle diameter (R) and a coating thickness (d) on a surface of the coating layer is 10.5 or more, **characterized in that** the organic particle is made of a thermoplastic resin including an ether bond while the coating layer is made of a binder resin including at least one selected from a sulfonic acid group, a carboxylic acid group, a hydroxyl group and a salt of them.

3.  The laminated film according to claim 1 or 2, wherein the organic particle is coated with the binder resin.

4.  The laminated film according to any of claims 1 to 3, wherein the surface roughness (SRz) is 5$\mu$m or more.

5.  The laminated film according to any of claims 1 to 4, wherein the coating thickness (d) is 1,100nm or less.

6.  The laminated film according to any of claims 1 to 5, wherein a flexural modulus of the organic particles is between 500MPa and 3,000MPa.

7.  The laminated film according to any of claims 1 to 6, wherein a particle diameter distribution index of the organic particles is between 1 and 3.

8.  The laminated film according to any of claims 1 to 7, wherein a particle density of the organic particles is between 5 units/mm$^2$ and 100,000 units/mm$^2$.

9.  The laminated film according to any of claims 1 to 8, wherein the base film comprises a white film.

10. A method for manufacturing the laminated film according to any of claims 1 to 9, **characterized in that** after coating a uniaxially-stretched base film with a coating liquid containing the organic particles and the binder resin including at least one selected from a sulfonic acid group, a carboxylic acid group, a hydroxyl group and a salt of them, the base film coated with the coating liquid is further stretched in a direction crossing a uniaxially-stretching direction of the base film and then is heat treated.

11. The method for manufacturing the laminated film according to claim 10, wherein a number average particle diameter R' of the organic particles contained in the coating liquid is 5$\mu$m or more.

12. The method for manufacturing the laminated film according to claim 10 or 11, wherein a particle diameter distribution index of the organic particles included in the coating liquid is between 1 and 3.

13. The method for manufacturing the laminated film according to any of claims 10 to 12, wherein a flexure modulus of the organic particles contained in the coating liquid is between 500MPa and 3,000MPa.

FIG. 1

FIG. 2

FIG. 3

(A)                    (B)

## INTERNATIONAL SEARCH REPORT

| | International application No. |
|---|---|
| | PCT/JP2012/056501 |

A. CLASSIFICATION OF SUBJECT MATTER
*C08J7/04*(2006.01)i, *B29C55/14*(2006.01)i, *B32B27/14*(2006.01)i, *B32B27/20*
(2006.01)i, *G02B5/02*(2006.01)i, *B29L9/00*(2006.01)n

According to International Patent Classification (IPC) or to both national classification and IPC

B. FIELDS SEARCHED

Minimum documentation searched (classification system followed by classification symbols)
C08J7/04-7/06, B29C55/00-55/30, B29C61/00-61/10, B32B1/00-43/00,
G02B5/00-5/08, G05B5/10-5/136, B29L9/00

Documentation searched other than minimum documentation to the extent that such documents are included in the fields searched
Jitsuyo Shinan Koho            1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y<br>A | JP 09-057921 A  (Teijin Ltd.),<br>04 March 1997 (04.03.1997),<br>claim 1; paragraphs [0001], [0021], [0022],<br>[0035], [0038]; example 5<br>(Family: none) | 1-10,12,13<br>11 |
| Y<br>A | WO 2009/142231 A1  (Toray Industries, Inc.),<br>26 November 2009 (26.11.2009),<br>claims 1 to 34; paragraphs [0203] to [0240]<br>& US 2011/0070442 A1<br>claims 1 to 32; paragraphs [0198] to [0241] | 1-10,12,13<br>11 |
| A | JP 2006-095954 A  (Sumitomo Chemical Co., Ltd.),<br>13 April 2006 (13.04.2006),<br>paragraph [0041]<br>(Family: none) | 1 |

☐  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 June, 2012 (11.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002162511 A
- JP 2003092018 A
- JP 2003107216 A
- JP 2004085633 A
- JP 2011013402 A
- JP 2004195673 A
- JP 4288217 A
- JP 2012975 B

- JP 51079158 A
- JP 2001213970 A
- WO 2009142231 A
- JP 2010217158 A
- JP 4239540 A
- JP 2004330727 A
- JP 6305019 A